# EUROPEAN PATENT SPECIFICATION

(11) **EP 3 115 841 B1**
(45) Date of publication and mention of the grant of the patent: **20.03.2019**
(21) Application number: 15758015.0
(22) Date of filing: 21.01.2015
(51) Int. Cl.: G03B 3/10, G03B 5/00, G02B 7/00, G02B 7/08, G02B 7/09, G03B 5/04, G02B 5/20, G02B 27/64, H04N 5/225, H04N 5/232

(54) **CAMERA LENS MODULE**
KAMERALINSENMODUL
MODULE D'OBJECTIF D'APPAREIL DE PRISE DE VUE

(30) Priority: 07.03.2014 KR 20140027013
(43) Date of publication of application: 11.01.2017
(73) Proprietor: Jahwa Electronics Co., Ltd., Chungcheongbuk-do 363-922 (KR)
(72) Inventor: KIM, Hee Seung, Seoul 143-865 (KR); KIM, In Soo, Seoul 152-906 (KR); NOH, Yo Han, Bucheon-si, Gyeonggi-do 420-833 (KR)
(74) Representative: De Pablos Riba, Juan Ramon
(86) International application number: PCT/KR2015/000592
(87) International publication number: WO 2015/133725

(56) References cited:
- JP-A- 2009 229 789
- JP-A- 2011 203 283
- KR-A- 20090 008 566
- KR-A- 20130 044 438
- US-A1- 2011 217 029
- US-A1- 2011 286 099
- US-A1- 2014 009 631

## Description

### TECHNICAL FIELD

The present disclosure relates to a camera lens module loaded on a portable mobile device, and more particularly, to a camera lens module having an image stabilization function and an automatic focus function.

### BACKGROUND ART

Along with the recent technical development, a portable terminal (hereinafter, referred to as a 'mobile device' such as a smart phone has a multi-convergence function as applications for music, movies, TV, games or the like are loaded in addition to a simple telephone function, and one of elements leading to the multi-convergence is a camera lens module.

A camera lens module loaded on a mobile device is being changed to have various additional functions such as an automatic focus (AF) function and an optical zoom function to cope with recent trends for more pixels and better functions, demanded by users. In particular, various attempts are recently being made to realize an optical image stabilization technique at a mobile device.

The optical image stabilization technique is used for optimally maintaining a resolution of a photographed image by automatically controlling a focus of a correcting lens of a camera module in a direction corresponding to hand shaking. In order to realize the optical image stabilization technique, an actuator for optical image stabilization is loaded on a camera module applied to a mobile device or a camcorder to adjust a focus.

A voice coil motor (VCM) type actuator using an interaction between a magnetic field and an electric field is broadly known in the art as an optical image stabilization actuator. The VCM type actuator generally includes a magnetic circuit in which a coil and a magnetic body are disposed to face each other, and a moving part (a mover) makes a plane movement with respect to a fixed part (a stator) by using an electromagnetic force generated by the magnetic circuit to perform correction against shaking.

Generally, two pairs of magnetic circuits, namely four magnetic circuits, are applied to face each other in two directions so that the mover may be moved in two directions, namely X-axis and Y-axis directions, to make a correction. However, in order to apply four magnetic circuits, a sufficient space is required as much, which results in an increased size and complicated configuration of the camera module and thus makes it difficult to design the camera module in a smaller size.

If the camera module is designed smaller by reducing a size of the mover or decreasing the number of components, the optical image stabilization function may have deteriorated accuracy and speed. In particular, when the optical image stabilization function is performed using a resultant force of forces applied in two directions, namely X-axis and Y-axis directions, perpendicular to each other, the mover may move beyond its movement range or generate an unnecessary rotation in operating, which may deteriorate accuracy in correction. Document US2011/0217029 discloses an anti-shake structure for an auto-focus module for driving a lens to move forward in rearward in an optical path comprising lens suspenders and a shake compensation driving unit for driving the lens suspenders to move horizontally to compensate for any image shift caused by hand shaking.

### DISCLOSURE

### Technical Problem

The present disclosure is directed to providing a camera lens module, which may allow stable and accurate image stabilization control with a compact structure in a small design.

The present disclosure is also directed to providing a camera lens module, which may have an image stabilization function with excellent accuracy and precision by suppressing a movement of a moving part beyond its movement range and an unnecessary rotation of the moving part, in the optical image stabilization function.

### Technical Solution

The above problem is solved by the camera module as defined by independent claim 1. Preferred embodiments are defined by the dependent claims.

### Advantageous Effects

If the camera lens module according to an embodiment of the present disclosure is used, an available space between a moving part (an image stabilization carrier and an automatic focus carrier having a lens barrel) and a fixed part (a base) may be effectively utilized to have a compact structure in which an automatic focus function and an image stabilization function are added, thereby satisfying both small product design and better functionality.

In addition, when the optical image stabilization is performed by means of a plurality of yokes separately arranged corresponding to image stabilization magnets (first and second magnets), it is possible to suppress a malfunction caused when a moving part moves beyond a stabilization range or unnecessarily rotates, thereby providing a satisfactory camera lens module with excellent accuracy and precision in the optical image stabilization.

Further, since carriers having the lens barrel are accommodated in the base, when the camera lens module is assembled, an optical axis between the lens barrel and an image sensor of the image sensor module assembled to the base may be aligned just by adjusting an assembling angle of the image sensor module with respect to the base, and thus a cumbersome optical axis aligning process is not separately required.

### DESCRIPTION OF DRAWINGS

FIG. 1 is an exploded perspective view showing a camera lens module according to an embodiment of the present disclosure.
FIG. 2 is a partial exploded perspective view showing a camera lens module according to an embodiment of the present disclosure.
FIG. 3 is a perspective view showing a camera lens module according to an embodiment of the present disclosure in an assembled state.
FIG. 4 is a cross-sectioned perspective view showing the camera lens module of FIG. 3, taken along the line A-A.
FIG. 5 is a cross-sectioned perspective view showing the camera lens module of FIG. 3, taken along the line B-B.
FIG. 6 is a plane view showing the camera lens module from which a cover is excluded.
FIG. 7 is a longitudinal sectioned view showing the camera lens module of FIG. 3, taken along the line C-C.
FIG. 8 is a perspective view showing an image stabilization carrier and an automatic focus carrier, employed at the camera lens module according to an embodiment of the present disclosure, before being assembled.
FIG. 9 is a planar schematic view showing a camera lens module according to an embodiment of the present disclosure for illustrating a disposition relation between an automatic focus driving unit and an image stabilization driving unit.
FIG. 10 is a diagram for illustrating an operation state of the camera lens module according to an embodiment of the present disclosure in relation to X-axis directional stabilization.
FIG. 11 is a diagram for illustrating an operation state of the camera lens module according to an embodiment of the present disclosure in relation to Y-axis directional stabilization.

### BEST MODE

Hereinafter, a preferred embodiment of the present disclosure will be described in detail with reference to the accompanying drawings. When explaining the present disclosure, any component known in the art will not be described in detail, and any component which may make an essence of the present disclosure unclear will also not be described in detail.

For convenience, a three-axis coordination system will be used for explanation. In the drawings, a Z axis is defined as a direction of an optical axis, an X axis is defined as a direction of optical image stabilization perpendicular to the Z axis which is the direction of an optical axis, and a Y axis is defined as another direction of optical image stabilization perpendicular to the X axis on the same plane.

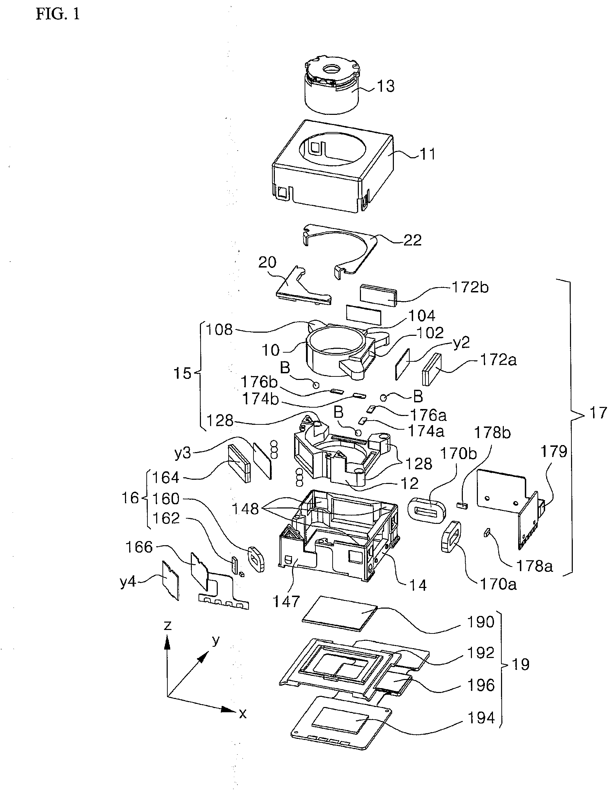

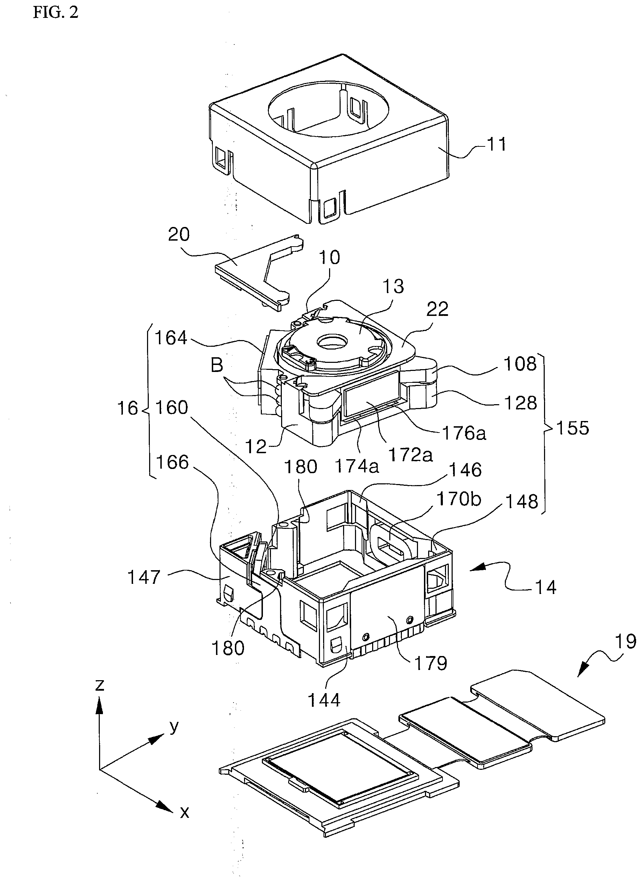

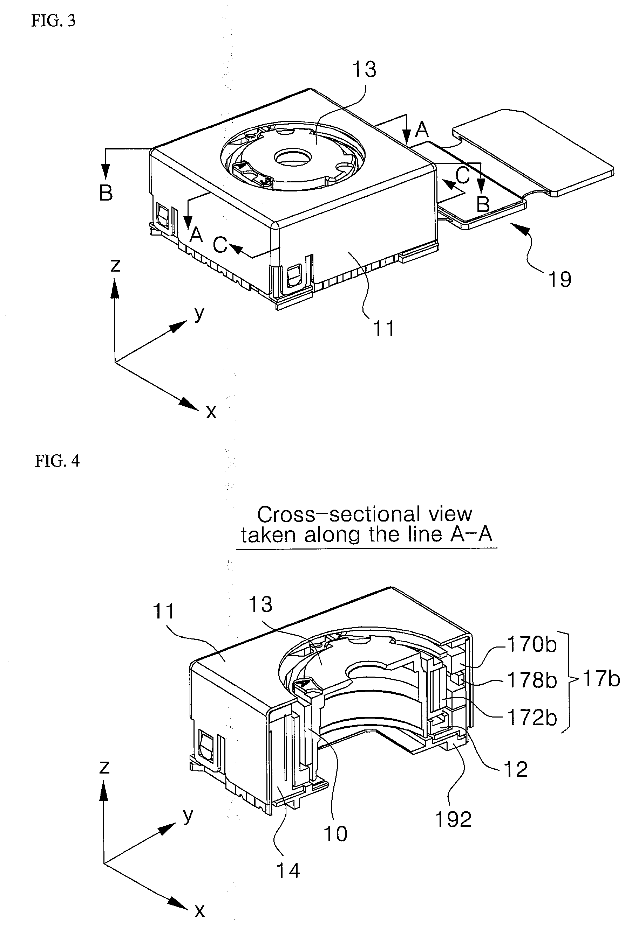

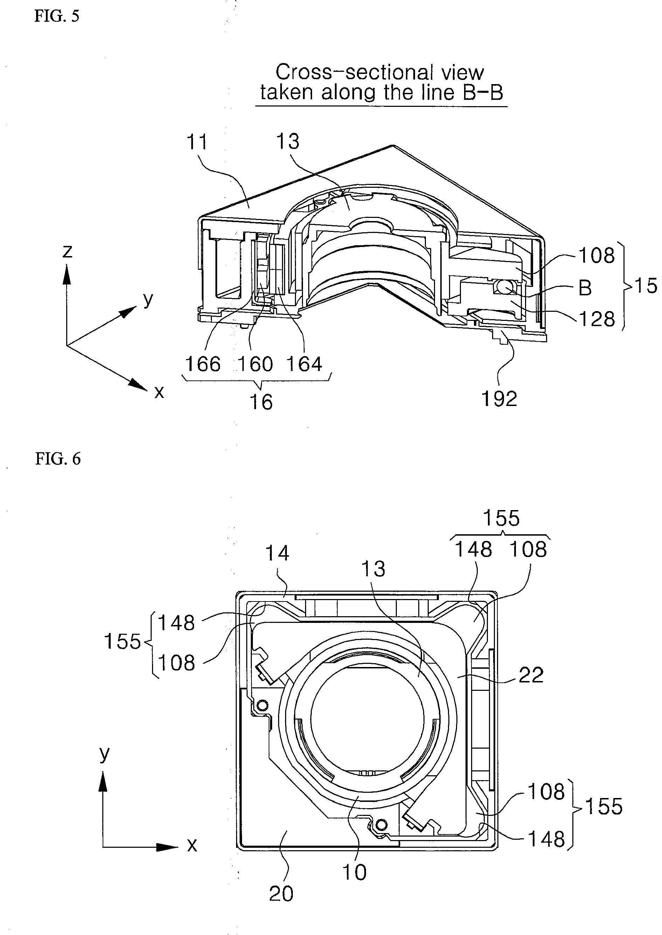

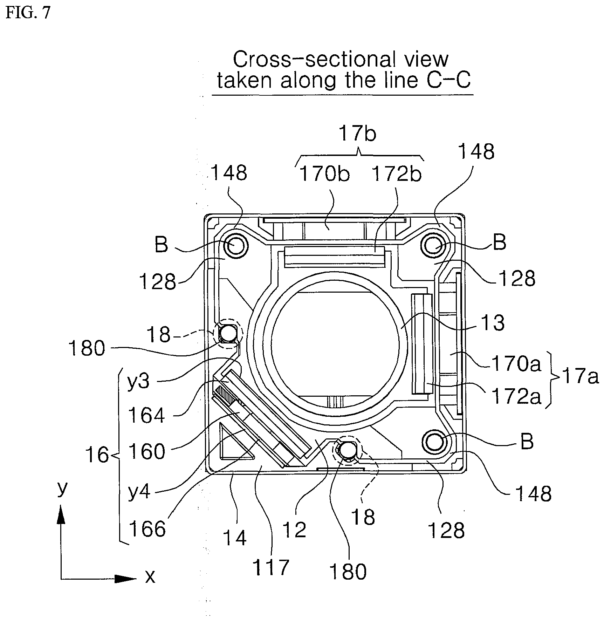

FIGS. 1, 2 and 3 are respectively an exploded perspective view, a partial exploded perspective view and an assembled perspective view showing a camera lens module according to an embodiment of the present disclosure, and FIGS. 4 and 5 are sectioned perspective views showing the camera lens module of FIG. 3, respectively taken along the line A-A and the line B-B. Also, FIG. 6 is a plane view showing the camera lens module from which a cover is excluded, and FIG. 7 is a longitudinal sectioned view showing the camera lens module of FIG. 3, taken along the line C-C.

Referring to FIGS. 1 to 7, a camera lens module according to an embodiment of the present disclosure includes an image stabilization carrier 10 accommodating a lens barrel 13, and an automatic focus carrier 12 at which the image stabilization carrier 10 is placed. The automatic focus carrier 12 on which image stabilization carrier 10 is loaded is accommodated in the base 14 to be movable forwards and rearwards in a direction of an optical axis of a lens, and the base 14 accommodating the carriers 10; 12 is covered by a cover 11 provided above.

The image stabilization carrier 10 is placed on the automatic focus carrier 12 to be movable in two directions, namely X-axis and Y-axis directions, on a plane perpendicular to the optical axis, and a rolling unit 15 is provided between the automatic focus carrier 12 and the image stabilization carrier 10 so that a planar movement, namely a movement for stabilization, of the image stabilization carrier 10 with respect to the automatic focus carrier 12 may be stably made perpendicular to the optical axis.

When the automatic focus carrier 12 at which the image stabilization carrier 10 is placed is observed as a plane view, the automatic focus carrier 12 is formed with an approximately rectangular shape having four edges, from which one edge portion is removed.

A lens group (not shown) composed of a plurality of lenses is mounted to the lens barrel 13, and a hole (no reference symbol) having a diameter enough to stably accommodating the lens barrel 13 is provided to the image stabilization carrier 10. In addition, the base 14 includes a bottom portion 140 surrounding a lower surface of the automatic focus carrier 12, and a rectangular side portion 142 surrounding outer surfaces of the carriers 10, 12.

At a center of the bottom portion 140 of the base 14 surrounding the lower surface of the carrier, an opening is formed so that an infrared filter 190 of the image sensor module 19 is located therein. In addition, a filter base 192 at which the infrared filter 190 is mounted is assembled to a lower surface of the bottom portion 140, and a substrate 196 at which an image sensor 194 is mounted is assembled to a lower surface of the filter base 192. Here, the substrate 196 may be a flexible substrate.

The image stabilization carrier 10 accommodating the lens barrel 13 has a cylindrical shape, and the base 14 has a hexahedral shape. Therefore, if the image stabilization carrier 10 is accommodated in the base 14, four available spaces are created at edges of the base 14, respectively, and an automatic focus driving unit 16 and a fluctuation limiting unit 155, explained later, are disposed at the available spaces, thereby ensuring efficient component mounting and a smaller produce size by means of effective utilization of the available spaces.

If the image stabilization carrier 10 provided in a cylindrical shape is cut in the direction of the optical axis, even though a machining tolerance is present between an outer diameter of the lens barrel 13 and an inner diameter of the image stabilization carrier 10 (for example, if the outer diameter of the lens barrel is greater than the inner diameter of the image stabilization carrier), elastic extension is allowed within a predetermined range, which ensures good assembling. Also, a lower end portion may also be partially eliminated to ensure a space for mounting components.

The automatic focus driving unit 16 are disposed at any one of four available spaces in any one edge region to generate a driving force for moving the automatic focus carrier 12 in the direction of the optical axis, and fluctuation limiting units 155 are disposed at the other three available spaces to prevent the carriers 10, 12 on which the lens barrel 13 is loaded from being deviated from a location aligned with the optical axis due to an external impact.

The automatic focus driving unit 16 includes an automatic focus coil 160 mounted to an edge of the base 14 at which the image stabilization driving unit 17 is partially mounted, at a side opposite to an edge where the first side 144 and the second side 146 are perpendicular, an operating driver 162 disposed at a side adjacent to the automatic focus coil 160, and an automatic focus magnet 164 mounted to a magnet mounting portion 120 at an outer surface of the automatic focus carrier 12 facing the automatic focus coil 160.

The operating driver 162 may be loaded out portion of the camera lens module (at a mobile device on which the camera lens module is loaded) and thus may be excluded on occasions. At this time, an automatic focus adjustment sensor may be disposed at an inner side or an adjacent side of the automatic focus coil 160 to detect a location change of the automatic focus carrier 12 with respect to the base during the automatic focus driving process.

A pair of optical axis guide device 18 having a known shape and including a ball B, not described in detail, is disposed at both right and left sides of the automatic focus magnet 164 and edge regions of the base 14 corresponding thereto to guide a movement of the automatic focus carrier 12 along an optical axis with respect to the base 14, and a back yoke y3 is disposed at a rear side of the automatic focus magnet 164 to focus the entire magnetic field by the automatic focus coil 160 and the magnet, thereby improving driving efficiency.

When the optical axis guide device 18 is configured, as shown in FIG. 7, guide surfaces of guide members 180 formed at both sides of the base perpendicular to the mounting portion 147 at the edge of the base 14 at which some components (automatic focus coil) of the automatic focus driving unit 16 are mounted may be provided with an asymmetric structure (a guide surface at one side has a V-shaped section, and a guide surface at the other side has a U-shaped section), so that forward and rearward movements along the direction of the optical axis may be smoothly performed.

The automatic focus coil 160 receives power from a substrate 166 disposed at the rear thereof to generate an electric field, and due to the force (Lorentz's force) generated by an electric field of the automatic focus coil 160 and a magnetic field of the automatic focus magnet 164, the automatic focus carrier 12 is guided in the base 14 by means of one pair of guide devices 18 to stably move forwards and rearwards along the optical axis without shaking.

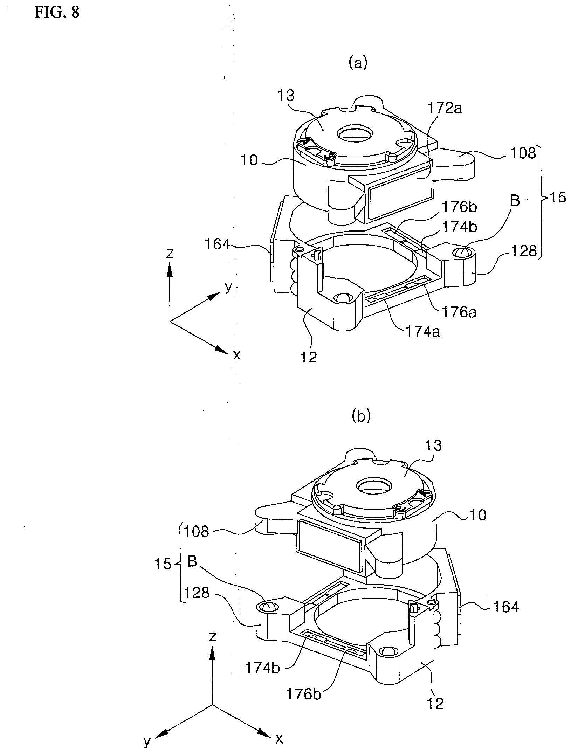

The rolling unit for supporting to ensure secure stabilization will be described with reference to FIG. 8.

Referring to FIG. 8, the rolling unit 15 includes two or more supports 128 integrally provided to each edge of the automatic focus carrier 12 and having a concave accommodation surface formed at an upper surface thereof, and two or more placing units 108 protruding at a periphery of the image stabilization carrier 10 to correspond to the supports 128 and having a concave accommodation surface formed at a lower surface thereof, and two or more balls B interposed between the supports 128 and the placing units 108.

In detail, the supports 128 are respectively formed at both adjacent side edges of the magnet mounting portion 163, disposed obliquely at one edge of the base 14, and at opposite edges diagonally, and the placing units 108 are integrally formed at the periphery of the image stabilization carrier 10 to correspond to the supports 128 in one-to-one relation. In addition, the balls B are interposed so that a part and another part thereof are accommodated in accommodation surfaces of the supports 128 and the placing units 108.

The balls B are located between the image stabilization carrier 10 and the automatic focus carrier 12. Each of the image stabilization carrier 10 and the automatic focus carrier 12 makes a point contact with the balls B directly. In an embodiment of the present disclosure, the image stabilization carrier 10 makes a point contact with a top portion of the balls B and the automatic focus carrier 12 makes a point contact with a bottom portion of the balls B. The image stabilization carrier 10 and automatic focus carrier 12 are disposed symmetrically to face each other with the balls B being interposed between them.

When being assembled, the support 128 and the placing unit 108 are disposed vertically with respect to the direction of the optical axis to form a single fluctuation suppressing unit, and two or more concave portions 148 into which the fluctuation suppressing unit may be inserted are provided at an inner side of the edge of the base 14 corresponding to the fluctuation suppressing unit along the direction of the optical axis, respectively, so that the fluctuation suppressing unit 108, 128 and the concave portions 148 configure the fluctuation limiting unit 155 described above.

Due to the fluctuation limiting unit 155 configured by the support 128, the placing unit 108 and the concave portion 148, during automatic focusing or optical image stabilization, or when an internal or external impact occurs at the camera lens module, it is possible to suppress excessive fluctuation or deviation of the carriers 10, 12 with respect to the base 14, thereby enhancing impact resistance and reliability.

In addition, a side of each support 128 protruding at the bottom of the automatic focus carrier 12 and a side of a mounting unit 102 of the image stabilization carrier 10, explained later, are provided to face each other, and the mounting unit 102 is assembled to be engaged between the supports 128, thereby suppressing excessive fluctuation or deviation of the image stabilization carrier 10 with respect to the automatic focus carrier 12 when an internal or external impact occurs.

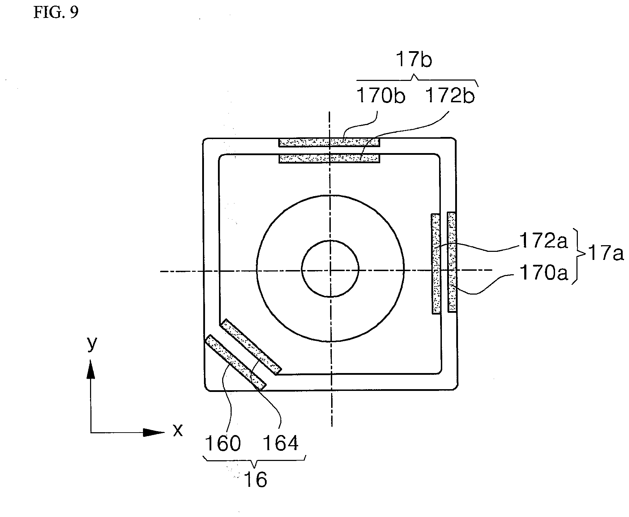

The image stabilization driving unit 17 for generating a force for a planar movement on an XY plane of the image stabilization carrier 10 with respect to the automatic focus carrier 12 is disposed at the other side of the automatic focus driving unit 16 to make suitable correction against hand shaking. The image stabilization driving unit 17 will be described later with reference to FIGS. 8 and 9.

FIG. 9 is a schematic view showing a disposition relation between the automatic focus driving unit and the image stabilization driving unit.

Referring to FIGS. 8 and 9, the image stabilization driving unit 17 includes coils 170a, 170b and magnets 172a, 172b, respectively mounted to both sides of the base 14 (called a first side 144 and a second side 146 for convenience) at an edge diagonally opposite to the edge of the base 14 at which the automatic focus coil 160 is mounted, and to an outer surface of the image stabilization carrier 10 facing with the sides.

In addition, the image stabilization driving unit 17 includes yokes 174a, 176a, 174b, 176b disposed between the carriers 10, 12 to correspond to the magnets 172a, 172b.

In detail, the image stabilization driving unit 17 may be classified into a first image stabilization driving unit 17a disposed between the first side 144 of the base 14 and the image stabilization carrier 10 to generate a force for X-axis directional movement of the image stabilization carrier 10, and a second image stabilization driving unit 17b disposed between the second side 146 of the base 14 perpendicular to the first side 144 and the image stabilization carrier 10 to generate a force for Y-axis directional movement of the image stabilization carrier 10.

By means of a resultant force of a component of the X-axis directional force generated by the first image stabilization driving unit 17 and a component of the Y-axis directional force generated by the second image stabilization driving unit 17, the image stabilization carrier 10 may perform a suitable correction against hand shaking while making a planar movement on the XY plane of the automatic focus carrier 12 in a direction of the resultant force.

In detail, the first image stabilization driving unit 17a includes a first coil 170a mounted to the first side 144 of the base 14, and a first magnet 172a mounted to the mounting surface 102 of the image stabilization carrier 10 which faces the first coil 170a of the first side 144. In addition, the first image stabilization driving unit 17a includes first and second yoke 174a, 176a corresponding to the first magnet 172a in a pair laterally, and a first location detection sensor 178a configured to detect a location change of the first magnet 172a with respect to the first coil 170a.

The first and second yoke 174a, 176a are mounted at one side of a bottom rim of the automatic focus carrier 12 separately so that each of the first and second yoke 174a, 176a is disposed corresponding to each region formed by dividing based on a central axial line A1 in the direction of an optical axis of the first magnet 172a. Preferably, the first and second yoke 174a, 176a are disposed at locations symmetric based on the axial line A1 with the same size.

Between the first yoke 174a and the first magnet 172a and between the second yoke 176a and the first magnet 172a, disposed symmetrically based on the axial line A1, attractive forces of the same intensity are applied. Thus, during the stabilization process, the image stabilization carrier 10 is suppressed not to rotate in one direction on the XY plane, and after correction, the image stabilization carrier 10 may accurately return to a central location of the optical axis.

In other words, the first and second yokes 174a, 176a separately installed corresponding to each region divided based on the central axial line in the direction of an optical axis of the first magnet 172a generates an attractive force with respect to the first magnet 172a when the image stabilization carrier 10 operates for stabilization, thereby allowing the image stabilization carrier 10 to make a stable linear movement without rotation in a direction where a stabilization driving force is applied.

The first location detection sensor 178a detects a location change of the first magnet 172a with respect to the first coil 170a. The first location detection sensor 178a recognizes a location of the image stabilization carrier 10 with respect to the base 14 in real time by means of a change of a magnetic field of the first magnet 172a, and a feedback control is performed to the first image stabilization driving unit 17 based on the recognized location in comparison to an initial location to perform a precise correction against shaking.

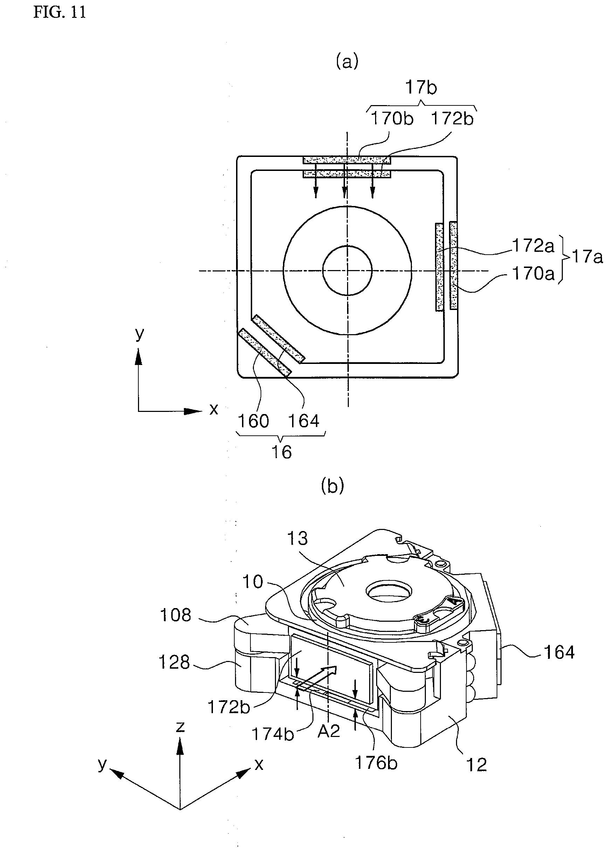

The second image stabilization driving unit 17b includes a second coil 170b mounted to the second side 146 of the base 14, and a second magnet 172b mounted to the mounting surface 104 of the image stabilization carrier 10 which faces the second coil 170b of the second side 146. In addition, the second image stabilization driving unit 17b includes third and fourth yokes 174b, 176b corresponding to the second magnet 172b in a pair laterally, and a second location detection sensor 178b configured to detect a location change of the second magnet 172b with respect to the second coil 170b (see FIG. 11 explained later).

The third and fourth yokes 174b, 176b are mounted at the other side of the bottom rim of the automatic focus carrier 12 separately so that each of the third and fourth yokes 174b, 176b is disposed corresponding to each region formed by dividing based on a central axial line (A2) in the direction of an optical axis of the second magnet 172b, similar to the first and second yokes 174a, 176a. Thus, the third and fourth yokes 174b, 176b suppresses the image stabilization carrier 10 not to rotate in one direction on the XY plane during the stabilization process, and gives a restoring force so as to return to a central location of the optical axis.

In other words, the third and fourth yokes 174b, 176b separately installed corresponding to each region divided based on the central axial line in the direction of an optical axis of the second magnet 172b generates an attractive force with respect to the second magnet 172b when the image stabilization carrier 10 operates for stabilization, thereby allowing the image stabilization carrier 10 to make a stable linear movement without rotation in a direction where a stabilization driving force is applied.

The second location detection sensor 178b detects a location change of the second magnet 172b with respect to the second coil 170b. The second location detection sensor 178b recognizes a location of the image stabilization carrier 10 with respect to the base 14 in real time by means of a change of a magnetic field of the second magnet 172b, and a feedback control is performed to the second image stabilization driving unit 17 based on the recognized location in comparison to an initial location to perform a precise correction against shaking.

Reference symbol 20 indicates an automatic focus stopper for preventing a Z-axial deviation of the carriers 10, 12 at which the lens barrel 13 is mounted, during an automatic focusing process, and also determining a maximum stroke. Reference symbol 22 indicates an image stabilization stopper provided to limit a Z-axial movement of the image stabilization carrier 10 during a stabilization process. Also, reference numeral 179 designates a substrate at which a coil of the image stabilization driving unit 17 is mounted and configured to supply power to the coil.

Even though the figures exemplarily show that the automatic focus stopper 20 is assembled to an upper portion of the base, a step may be formed at the cover at a location corresponding to the automatic focus stopper 20 to replace the automatic focus stopper 20. In this case, a damper may be attached to the step to attenuate an impact when a carrier comes into contact thereto.

Also, reference symbols y1, y2, y4 designate back yokes respectively disposed at a substrate 166 of the automatic focus driving unit 16 and rear surfaces of the first and second magnets 172a, 172b of the first and second image stabilization driving units 17a, 17b in order to concentrate the entire magnetic field and thus enhance the efficiency for automatic focusing and stabilization.

Hereinafter, the optical image stabilization performed by the image stabilization driving unit configured as above will be described.

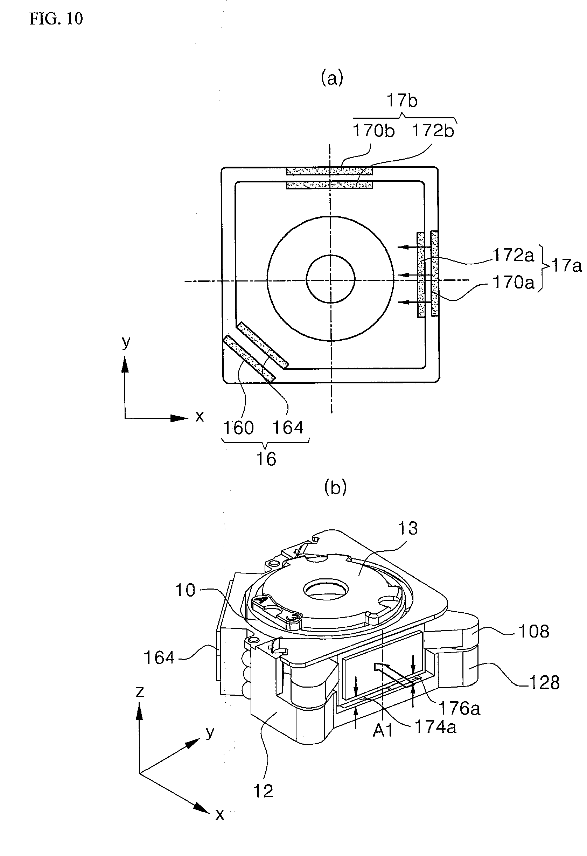

FIG. 10 is a diagram showing operation states in relation to X-axis directional stabilization of a camera lens module according to an embodiment of the present disclosure. Here, (a) of FIG. 10 is a diagram schematically showing an operation principle of the first image stabilization driving unit in relation to the X-axis directional stabilization, and (b) of FIG. 10 is an enlarged perspective view showing an essential portion to explain a relation between the first magnet and the first and second yokes during optical image stabilization in an X-axis direction.

Referring to (a) of FIG. 10, in a stopped state, namely in a state where power is not input, due to an attractive force by a magnetic force generated by the first magnet 172a and the second magnet 172b toward the first coil 170a and the second magnet 172b, the center of the image stabilization carrier 10 keeps accurately aligned with the optical axis without deviating in any direction on the XY plane of the automatic focus carrier 12.

If power is supplied to the first coil 170a through the substrate 179 of the image stabilization driving unit 17 in a stopped state, a force for moving the image stabilization carrier 10 forwards or rearwards in the X-axis direction is generated due to a reaction between the electric field of the first coil 170a and the magnetic field of the first magnet 172a, and this force allows the image stabilization carrier 10 accommodating the lens barrel 13 to move corresponding to shaking in the X-axis direction on the XY plane.

While correcting the shaking in the X-axis direction, the first location detection sensor 178a recognizes a location of the image stabilization carrier 10 with respect to the base 14 in real time by detecting a location change of the first magnet 172a with respect to the first coil 170a, and a feedback control is performed to the first image stabilization driving unit 17 based on the recognized location in comparison to an initial location to perform a precise correction against shaking.

During stabilization in the X-axis direction, since the first and second yokes 174a, 176a are separately mounted so that each of the first and second yoke 174a, 176a is disposed corresponding to each region formed by dividing based on the central axial line in the direction of an optical axis of the first magnet 172a, an attractive force is equivalently applied to two divided regions as shown in (b) of FIG. 10, and accordingly the image stabilization carrier 10 makes a stable linear movement without rotating.

FIG. 11 is a diagram for illustrating an operation state of a camera lens module according to an embodiment of the present disclosure in relation to Y-axis directional stabilization. Here, (a) of FIG. 11 is a diagram schematically showing an operation principle of the second image stabilization driving unit in relation to the Y-axis directional stabilization, and (b) of FIG. 11 is an enlarged perspective view showing an essential portion to explain a relation between the second magnet and the third and fourth yokes during optical image stabilization in a Y-axis direction.

Contrary to FIG. 10, in a stopped state, if power is supplied to the second coil 170b through the substrate 179 of the image stabilization driving unit 17, due to an interaction between the electric field of the second coil 170b and the magnetic field of the second magnet 172b, a force for moving the image stabilization carrier 10 forwards or rearwards is generated in the Y-axis direction. At this time, this force allows the image stabilization carrier 10 accommodating the lens barrel 13 to move corresponding to shaking in the Y-axis direction on the XY plane.

Similarly, while correcting the shaking in the Y-axis direction, the second location detection sensor 178b recognizes a location of the image stabilization carrier 10 with respect to the base 14 in real time by detecting a location change of the second magnet 172b with respect to the second coil 170b, and a feedback control is performed to the second image stabilization driving unit 17a based on the recognized location in comparison to the initial location to perform a precise correction against shaking.

During stabilization in the Y-axis direction, since the third and fourth yokes 174b, 176b are separately mounted so that each of the third and fourth yokes 174b, 176b is disposed corresponding to each region formed by dividing based on the central axial line in the direction of an optical axis of the second magnet 172b, an attractive force is equivalently applied to two divided regions as shown in (b) of FIG. 11, and accordingly the image stabilization carrier 10 makes a stable linear movement without rotating.

Though not shown in detail, in an actual operation for stabilization, forces of different intensities and directions are applied in the X-axis and Y-axis directions by means of the first image stabilization driving unit 17 and the second image stabilization driving unit 17, and the image stabilization carrier 10 is moved in a direction where X-axis and Y-axis vector components by the first and second image stabilization driving units 17 are composed, thereby correcting the shaking.

If the camera lens module according to an embodiment of the present disclosure as described above is used, an available space (an available edge space) between a moving part (an image stabilization carrier and an automatic focus carrier having a lens barrel) and a fixed part (a base) may be effectively utilized to have a compact structure in which an automatic focus function and an image stabilization function are added, thereby satisfying both small product design and better functionality.

In addition, when the optical image stabilization is performed by means of a plurality of yokes separately arranged corresponding to image stabilization magnets (first and second magnets), it is possible to suppress a malfunction caused when a moving part moves beyond a stabilization range or unnecessarily rotates, thereby providing a satisfactory camera lens module with excellent accuracy and precision in the optical image stabilization.

Further, since carriers having the lens barrel are accommodated in the base, when the camera lens module is assembled, an optical axis between the lens barrel and an image sensor of the image sensor module assembled to the base may be aligned just by adjusting an assembling angle of the image sensor module with respect to the base, and thus a cumbersome optical axis aligning process is not separately required.

Even though it has been illustrated and described that the image stabilization carrier is loaded on the automatic focus carrier, this may be reversely modified so that the image stabilization carrier 10 is mounted to the base 14 and the automatic focus carrier 12 is loaded on the image stabilization carrier 10, and it should be understood that such a modification also falls within the scope of the present disclosure.

In such a modification, the rolling unit 15 and the first to fourth yokes 176a, 174a, 176b, 174b, described above, may be mounted between the image stabilization carrier 10 and the base 14 to stabilize the image stabilization carrier 10 and prevent excessive rotation of the image stabilization carrier 10.

In this case, a through hole may be formed in the image stabilization carrier 10 at a portion where the automatic focus driving unit is mounted, and the automatic focus magnet 164 and the automatic focus coil 160 applied to an embodiment may be disposed to face each other with the through hole being disposed between them. If there is no through hole, the automatic focus driving unit may be disposed between the image stabilization carrier 10 and the automatic focus carrier 12, and power may be applied to the coil of the image stabilization carrier to perform automatic focusing.

In the detailed description of the present disclosure, only specific embodiments have been described. However, the present disclosure should not be interpreted as being limited to such specific embodiments in the detailed description, and it should be understood that all modifications, equivalents and substitutions within the scope of the present disclosure defined by the appended claims are included in the present disclosure.

### INDUSTRIAL APPLICABILITY

The present disclosure may be utilized as a camera lens module loaded on a portable mobile device.

## Claims

1. A camera lens module including an automatic focus driving unit (16); image stabilization driving units (17); an image stabilization carrier (10) configured to accommodate a lens barrel (13) and driven by the image stabilization driving units (17); an automatic focus carrier (12) being driven by the automatic focus driving unit (16); and a base (14) configured to accommodate the automatic focus carrier (12) so that the automatic focus carrier (12) is movable forwards and rearwards in a direction of an optical axis, **characterized in that**
the automatic focus drivina unit (16) is disposed at a corner of the camera lens module, the image stabilization driving units (17) are disposed perpendicular to each other at a surface or corner of the camera lens module opposite to the corner at which the automatic focus driving unit (16) is located and
the image stabilization carrier (10) is loaded on the automatic focus carrier (12) and wherein when the automatic focus carrier (12) moves in the optical axis by the automatic focus driving unit (16), the image stabilization carrier (10) loaded on the automatic focus carrier (12) is moved together with the automatic focus carrier (12) in the optical axis.

2. The camera lens module according to claim 1, wherein the image stabilization driving units (17) include:
a first image stabilization driving unit (17a) disposed at a surface or a side adjacent to a corner opposite to the corner at which the automatic focus driving unit (16) is located; and
a second image stabilization driving unit (17b) perpendicular to the first image stabilization driving unit(17a).

3. The camera lens module according to claim 2, wherein the first image stabilization driving unit (17a) includes:
a first coil (170a) mounted to a first side of the base (14);
a first magnet (172a) mounted to a mounting surface of the image stabilization carrier (10) facing the first side; and
first and second yokes (174a, 176a) corresponding to the first magnet (172a) in a pair laterally.

4. The camera lens module according to claim 3, further comprising:
a first location detection sensor (178a) configured to detect a location change of the first magnet (172a) with respect to the first coil (170a).

5. The camera lens module according to claim 3,
wherein the first and second yokes (174a, 176a) are mounted at one side of the automatic focus carrier (12) so that each yoke (174a, 176a) is disposed corresponding to each region formed by dividing based on a central axial line in the direction of an optical axis of the first magnet (172a).

6. The camera lens module according to claim 2, wherein the second image stabilization driving unit (17b) includes:
a second coil (170b) mounted to a second side of the base (14);
a second magnet (172b) mounted to a mounting surface of the image stabilization carrier (10) facing the second side; and
third and fourth yokes (174b, 176b) corresponding to the second magnet (172b) in a left and right pair.

7. The camera lens module according to claim 6, further comprising:
a second location detection sensor (187b) configured to detect a location change of the second magnet (172b) with respect to the second coil (170b).

8. The camera lens module according to claim 6,
wherein the third and fourth yokes (174b, 176b)are mounted at the other side of the automatic focus carrier (12)so that each yoke (174b, 176b) is disposed corresponding to each region formed by dividing based on a central axial line in the direction of an optical axis of the second magnet (172b).

9. The camera lens module according to claim 1, wherein the automatic focus driving unit (16) includes:
an automatic focus coil (160) mounted to a corner of the base (14) of the camera lens module;
an operating driver (162) disposed at a side adjacent to the automatic focus coil (160); and
an automatic focus magnet (164) mounted to an outer surface of the automatic focus carrier (12)facing the automatic focus coil (160).

10. The camera lens module according to claim 1, wherein the automatic focus driving unit (16) includes:
an automatic focus coil (160) mounted to a corner of the base of the camera lens module;
an automatic focus adjustment sensor loaded on a substrate at which the automatic focus coil (160) is mounted; and
an automatic focus magnet (164) mounted to an outer surface of the automatic focus carrier (12) facing the automatic focus coil (160).

11. The camera lens module according to claim 1, further comprising:
a rolling unit (15) configured to support a planar movement perpendicular to the optical axis of the image stabilization carrier (10) with respect to the automatic focus carrier (12).

12. The camera lens module according to claim 11, wherein the rolling unit (15) includes:
two or more supporting pieces (128) integrally provided at a corner of the automatic focus carrier (12) and having a concave accommodation surface formed at an upper surface thereof;
two or more placing units (108) protruding at a periphery of the image stabilization carrier (10) to correspond to the supporting pieces and having a concave accommodation surface formed at a lower surface thereof; and
two or more balls (B) interposed between the accommodation surfaces of the supporting pieces (128) and the placing units (108) so that a part and another part thereof are accommodated therein.

13. The camera lens module according to claim 12,
wherein the supporting pieces (128) and the placing unit (108) are disposed to be vertically stacked with respect to the direction of the optical axis to form a single fluctuation suppressing unit, and
wherein two or more concave portions into which the fluctuation suppressing unit is capable of being inserted are provided at an inner side of a corner of the base (14) along the direction of the optical

14. The camera lens module according to claim 1, wherein the base (14) includes:
a bottom portion (140) having an open center portion to surround a lower surface of the automatic focus carrier (12); and
a rectangular side portion (142) configured to surround the automatic focus carrier (12) and the image stabilization carrier (10) loaded thereon.

15. The camera lens module according to claim 14,
wherein a mounting portion (120) is formed at a corner of the base to mount a part of the automatic focus driving unit (16), and
wherein a pair of guide members (180) is provided at each side of the corner at which the mounting portion (120) is formed, to configure an optical axis guide device in which the guide members (180) are perpendicular to each other.

16. The camera lens module according to claim 1, further comprising:
a stopper (20) assembled to the base (14) to restrict a movement of the image stabilization carrier (10) accommodating the lens barrel in the direction of the optical axis.

17. The camera lens module according to claim 1, further comprising:
an image sensor (194) module mounted to a lower portion of the base (14),
wherein the image sensor (194) module includes:
an infrared filter (190) disposed at a center of an opening of a bottom portion (140) of the base (14);
a filter base (192) to which the infrared filter (190) is mounted; and
a substrate (196) to which an image sensor disposed below the infrared filter (190) is mounted.

## Patentansprüche

1. Kameralinsenmodul mit einer Autofokus-Antriebseinheit (16); Bildstabilisierung-Antriebseinheiten (17); einemBildstabilisierungsträger (10),der dafür konfiguriert ist,einenObjektivtubus (13) aufzunehmen, und welcher durch die Bildstabilisierung-Antriebseinheiten (17) angetrieben wird; einemdurch die Autofokus-Antriebseinheit (16) angetriebenen Autofokusträger (12); und einem Boden (14),der dafür konfiguriert ist, den Autofokusträger (12) aufzunehmen, so dass der Autofokusträger (12) vorwärts und rückwärts in einer Richtung einer optischen Achse beweglich ist, **dadurch gekennzeichnet, dass**
die Autofokus-Antriebseinheit (16) an einemEckpunkt des Kameralinsenmodulsangeordnet ist,die Bildstabilisierung-Antriebseinheiten (17) senkrecht zueinander an einer Oberfläche oder einemEckpunkt des Kameralinsenmodulsgegenüber dem Eckpunkt,anwelchem sich die Autofokus-Antriebseinheit (16) befindet,angeordnet sindund
der Bildstabilisierungsträger (10) von dem Autofokusträger (12) getragen wird und wobei, wenn der Autofokusträger (12) sich mittels der Autofokus-Antriebseinheit (16) auf der optischen Achse bewegt, der Bildstabilisierungsträger (10), getragen von dem Autofokusträger (12),sich zusammen mit dem Autofokusträger (12) auf der optischen Achse bewegt.

2. Kameralinsenmodul nach Anspruch 1,wobei die Bildstabilisierung-Antriebseinheiten (17)umfassen:
eine an einerOberfläche oder einer benachbarten Seite eines Eckpunktes gegenüber dem Eckpunkt,an welchem sich die Autofokus-Antriebseinheit (16) befindet, angeordnete Bildstabilisierung-Antriebseinheit (17a)
und eine zweiteBildstabilisierung-Antriebseinheit (17b) senkrecht zu der erstenBildstabilisierung-Antriebseinheit (17a).

3. Kameralinsenmodul nach Anspruch 2, wobei die erste Bildstabilisierung-Antriebseinheit (17a) umfasst:
eine an einer ersten Seite des Bodens (14) angebrachte erste Spule (170a);
ein an der auf die erste Fläche zugewandte Montagefläche des Bildstabilisierungsträger (10) angebrachter erster Magnet (172a), und
erste und zweiteJoche (174a, 176a)entsprechend dem ersten Magneten (172a) seitlich in einem Paar.

4. Kameralinsenmodul nach Anspruch 3,ferner umfassend:
einen ersten Positionserfassungssensor (178a), welcher konfiguriert ist, eine Ortsänderung des ersten Magneten (172a) in Bezug auf die erste Spule (170a) zu erfassen.

5. Kameralinsenmodul nach Anspruch 3,wobei das erste und zweite Joch (174a, 176a) an einer Seite des Autofokusträgers (12) montiert sind, so dass jedes Joch (174a, 176a) entsprechend jedemdurchUnterteilung,basierend auf einer zentralen axialen Linie in Richtung einer optischen Achse des ersten Magneten (172a), geformten Bereich angeordnet ist.

6. Kameralinsenmodul nach Anspruch 2, wobei die zweite Bildstabilisierung-Antriebseinheit (17b) umfasst:
eine an einer zweiten Seite des Bodens (14) angebrachte zweite Spule (170b);
ein an der auf die zweite Fläche zugewandte Montagefläche des Bildstabilisierungsträger (10) angebrachterzweiter Magnet (172b), und
dritte und vierte Joche (174b, 176b) entsprechend dem zweiten Magneten (172b) in einem rechten und linken Paar.

7. Kameralinsenmodul nach Anspruch 6,ferner umfassend:
einen zweiten Positionserfassungssensor (178b), welcher konfiguriert ist, eine Ortsänderung des zweiten Magneten (172b) in Bezug auf die zweite Spule (170b) zu erfassen.

8. Kameralinsenmodul nach Anspruch 6,wobei das dritte und vierte Joch (174b, 176b) an einer anderen Seite des Autofokusträgers (12) montiert sind, so dass jedes Joch (174b, 176b) entsprechend jedem durchUnterteilung,basierend auf einer zentralen axialen Linie in Richtung einer optischen Achse des zweiten Magneten (172b), geformten Bereich angeordnet ist.

9. Kameralinsenmodul nach Anspruch 1, wobei die Autofokus-Antriebseinheit (16) umfasst:
eine Autofokusspule (160), die an einem Eckpunkt desBodens (14) des Kameralinsenmodulsangebracht ist;
einen Betriebsantrieb (162), der neben der Autofokusspule (160) angeordnet ist; und
einen Autofokusmagnet (164), der an einerauf die Autofokusspule (160) zugewandte äußeren Oberfläche des Autofokusträgers (12)angebracht ist.

10. Kameralinsenmodul nach Anspruch 1, wobei die Autofokus-Antriebseinheit (16) umfasst:
eine Autofokusspule (160), die an einem Eckpunkt des Bodens des Kameralinsenmoduls angebracht ist;
einen Autofokus-Einstellungssensor, welcher von einem Substratträger, an welchem die Autofokusspule (160) angebracht ist, getragen wird, und
einen Autofokusmagnet (164), der an einer auf die Autofokusspule (160) weisende äußeren Oberfläche des Autofokusträgers (12) angebracht ist.

11. Kameralinsenmodul nach Anspruch 1,ferner umfassend:
eine Walzeinheit (15), die konfiguriert ist, um eine planare Bewegung senkrecht zu der optischen Achse des Bildstabilisierungsträgers (10) in Bezug auf den Autofokusträger (12) zu unterstützen.

12. Kameralinsenmodul nach Anspruch 11, wobei die Walzeinheit (15) umfasst:
zwei oder mehr Stützteile (128), welche ganzheitlich an einem Eckpunkt des Autofokusträgers (12) bereitgestellt sind und eine konkave Auflagefläche aufweisen, die an einer oberen Fläche derselben ausgebildet ist;
zwei oder mehr Platzierungseinheiten (108), welche am Umfang des Bildstabilisierungsträgers (10) vorstehen, um sich an dieStützteile anzupassen und eine konkave Aufnahmefläche an ihrer unteren Oberfläche haben; und
zwei oder mehr zwischen den Auflageflächen der Stützteile (128) und der Platzierungseinheiten (108) angeordnete Kugeln (B), so dass ein Teil und ein anderer Teil darin aufgenommen sind.

13. Kameralinsenmodul nach Anspruch 12,wobei die Stützteile (128) und die Platzierungseinheit (108) so angeordnet sind, dass sie in Bezug auf die Richtung der optischen Achse vertikal gestapelt werden können, um eine einzige Schwankungsunterdrückungseinheit zu bilden, undwobei zwei oder mehr konkave Abschnitte, in welche die Schwankungsunterdrückungseinheit eingesetzt werden kann, auf einer InnenseiteeinesEckpunktesdes Bodens (14) entlang der Richtung der Optik angeordnet sind.

14. Kameralinsenmodul nach Anspruch 1, wobei der Boden (14)umfasst:
einen unteren Teil (140) mit einem offenen mittleren Bereich, um eine untere Oberfläche des Autofokusträgers (12) zu umgeben; und
einen rechteckigen Seitenbereich (142), welcher konfiguriert ist, den Autofokusträger (12) undden von ihm getragenen Bildstabilisierungsträger (10) zu umgeben.

15. Kameralinsenmodul nach Anspruch 14,wobei ein Montageabschnitt (120) an einem Eckpunktdes Bodens ausgebildet ist, um einen Teil von der Autofokus-Antriebseinheit (16) zu montieren, undwobei ein Paar Führungselemente (180) an jeder Seite des Eckpunktes, an welchem der Montageabschnitt (120) ausgebildet ist, vorgesehen ist, um eine optische Achsenführungsvorrichtung zu bilden, in welcher die Führungselemente (180) senkrecht zueinander stehen.

16. Kameralinsenmodul nach Anspruch 1,ferner umfassend:
einen an den Boden (14) angebrachten Anschlag (20), um eine Bewegung des Bildstabilisierungsträgers(10) zu begrenzen, um den Objektivtubus in Richtung der optischen Achse aufzunehmen.

17. Kameralinsenmodul nach Anspruch 1,ferner umfassend:
ein Bildsensor (194) Modul, welches an einem unteren Teil des Bodens (14)montiert ist,wobei dasBildsensor (194) Modul umfasst:
einen Infrarotfilter (190), welcher sich in der Mitte einer Öffnung eines unteren Teiles (140) des Bodens (14) befindet;
einen Filterträger (192), an welchem der Infrarotfilter montiert ist; und
einen Substratträger (196), an welchem ein Bildsensor unter dem Infrarotfilter (190) angeordnet, montiert ist.

## Revendications

1. Un module de l'objectif de l'appareil photo qui comprend une unité d'entraînement d'une mise au point automatique (16) ; unités d'entraînement de stabilisation d'image (17) ; un porteur de stabilisation d'image (10) configuré pour loger unbarillet de l'objectif (13) et qui est entraîné par les unités d'entraînement de stabilisation d'image (17) ; un porteur de la mise au point automatique (12) entraîné par l'unité d'entraînement de la mise au point automatique (16) ; et une base (14) configurée pour loger le porteur de la mise au point automatique (12) de sorte que le porteur de la mise au point automatique (12) puisse se déplacer vers l'avant et vers l'arrière dans le sens d'un axe optique, **caractérisé en ce que**
l'unité d'entraînement de la mise au point automatique (16) est disposée sur un coin du module de l'objectif de l'appareil photo, les unités d'entraînement de stabilisation d'image (17) sont disposées de manière perpendiculaire l'une par rapport à l'autre à une surface ou à un coin du module de l'objectif de l'appareil photo qui est à l'opposé du coinsur lequel l'unité d'entraînement de la mise au point automatique (16) est positionnée et
le porteur de stabilisation d'image (10) est chargé sur le porteur de la mise au point automatique (12) oùlorsque le porteur de la mise au point automatique (12) se déplace dans l'axe optique par l'unité d'entraînement de la mise au point automatique (16), le porteur de stabilisation d'image (10) chargé sur le porteur de la mise au point automatique (12) se déplace avec le porteur de la mise au point automatique (12) dans l'axe optique.

2. Le module de l'objectif de l'appareil photo selon la revendication 1, dans lequel les unités d'entraînement de stabilisation d'image (17) comprennent :
une première unité d'entraînement de stabilisation d'image (17a) disposée à une surface ou à un côté adjacent à un coin qui est à l'opposé du coinsur lequel l'unité d'entraînement de la mise au point automatique (16) est positionnée ; et
une deuxième unité d'entraînement de stabilisation d'image (17b) qui est perpendiculaire à la première unité d'entraînement de stabilisation d'image (17a).

3. Le module de l'objectif de l'appareil photo selon la revendication 2, dans lequel la première unité d'entraînement de stabilisation d'image (17a) comprend :
une première bobine (170a) montée sur un premier côté de la base (14) ;
un premier aimant (172a) monté sur une surface de montage du porteur de stabilisation d'image (172a) faisant face au premier côté ; et
un premier et un deuxième attelages (174a, 176a) qui correspondent au premier aimant (172a) en paire latéralement.

4. Le module de l'objectif de l'appareil photo selon la revendication 3, comprend en outre :
un premier capteur de détection de localisation (178a) configuré pour détecter un changement de localisation du premier aimant (172a) par rapport à la première bobine (170a).

5. Le module de l'objectif de l'appareil photo selon la revendication 3,
dans lequel le premier et le deuxième attelages (174a, 176a) sont montés d'un côté du porteur de la mise au point automatique (12) de sorte que chaque attelage (174a, 176a) soit disposé de façon à correspondre à chaque région qui est formée en divisant sur une ligne axiale centrale dans la direction d'un axe optique du premier aimant (172a).

6. Le module de l'objectif de l'appareil photo selon la revendication 2, dans lequel la deuxième unité d'entraînement de stabilisation d'image (17b) comprend :
une deuxième bobine (170b) montée sur un deuxième côté de la base (14) ;
un deuxième aimant (172b) monté sur une surface de montage du porteur de stabilisation d'image (10) faisant face au deuxième côté ; et
un troisième et un quatrième attelages (174b, 176b) qui correspondent au deuxième aimant (172b) en paire de gauche et droite.

7. Le module de l'objectif de l'appareil photo selon la revendication 6, qui comprend en outre :
un deuxième capteur de détection de localisation (187b) configuré pour détecter un changement de localisation du deuxième aimant (172b) par rapport à la deuxième bobine (170b).

8. Le module de l'objectif de l'appareil photo selon la revendication 6,
dans lequel le troisième et le quatrième attelages (174b, 176b) sont montés de l'autre côté du porteur de la mise au point automatique (12) de sorte que chaque attelage (174b, 176b) soit disposé de façon à correspondre à chaque région qui est formée en divisant sur une ligne axiale centrale dans la direction d'un axe optique du deuxième aimant (172b).

9. Le module de l'objectif de l'appareil photo selon la revendication 1, dans lequel l'unité d'entraînement de la mise au point automatique (16) comprend :
une bobine de la mise au point automatique (160) montée sur un coin de la base (14) du module de l'objectif de l'appareil photo;
un contrôleur de fonctionnement (162) disposé d'un côté adjacent à la bobine de la mise au point automatique (160) ; et
un aimant de la mise au point automatique (164) monté sur une autre surface du porteur de la mise au point automatique (12) faisant face à la bobine de la mise au point automatique (160).

10. Le module de l'objectif de l'appareil photo selon la revendication 1, dans lequel l'unité d'entraînement de la mise au point automatique (16) comprend :
une bobine de la mise au point automatique (160) montée sur un coin de la base du module de l'objectif de l'appareil photo ;
un capteur de réglage de la mise au point automatique chargé sur un substratsur lequel la bobine de la mise au point automatique (160) est montée ; et
un aimant de la mise au point automatique (164) monté sur une autre surface du porteur de la mise au point automatique (12) faisant face à la bobine de la mise au point automatique (160).

11. Le module de l'objectif de l'appareil photo selon la revendication 1, lequel comprend en outre :
une unité de roulement (15) configurée pour soutenir un mouvement plan qui est perpendiculaire à l'axe optique du porteur de stabilisation d'image (10) par rapport au porteur de la mise au point automatique (12).

12. Le module de l'objectif de l'appareil photo selon la revendication 11, dans lequel l'unité de roulement (15) comprend :
deux ou plusieurs pièces d'appui (128) qui sont intégralement fournis au niveau d'un coin du porteur de la mise au point automatique (12) et
qui ont une surface de logement concave formée à unesurface supérieure de celle-ci ;
deux ou plusieurs unités de positionnement (108) protubérantes à une périphérie du porteur de stabilisation d'image (10) afin de correspondre aux pièces d'appui et
qui ont une surface de logement concave formée à une surface inférieure de celle-ci ; et
deux ou plusieurs boules (B) interposées entre les surfaces de logement des pièces d'appui (128) et les unités de positionnement (108) de sorte qu'une partie et une autre partie de celles-ci soient logées là.

13. Le module de l'objectif de l'appareil photo selon la revendication 12,
dans lequel les pièces d'appui (128) et l'unité de positionnement (108) sont disposées afin d'être verticalement empilées par rapport à la direction de l'axe optique pour former une seule unité de suppression de fluctuation, et
dans lequel deux ou plusieurs parties concaves où l'unité de suppression de fluctuation est capable d'y être insérée sont fournis au niveau d'un côté intérieur d'un coin de la base (14) dans le sens de l'axe optique.

14. Le module de l'objectif de l'appareil photo selon la revendication 1, dans lequel la base (14) comprend :
une partie inférieure (140) qui a une partie centrale ouverte pour entourer une surface inférieure du porteur de la mise au point automatique (12) ; et
une partie latérale rectangulaire (142) configurée pour entourer le porteur de la mise au point automatique (12) et le porteur de stabilisation d'image (10) chargé là-dessus.

15. Le module de l'objectif de l'appareil photo selon la revendication 14,
dans lequel une partie de montage (120) est formée à un coin de la base pour monter une partie de l'unité d'entraînement de la mise au point automatique (16), et
dans lequel une paire d'éléments de guidage (180) est fournie à chaque côté du coin sur lequel la partie de montage (120) est formée, afin de configurer un dispositif de guidage de l'axe optique dans lequel les éléments de guidage (180) sont perpendiculaires l'un par rapport à l'autre.

16. Le module de l'objectif de l'appareil photo selon la revendication 1, lequel comprend en outre :
un bouchon (20) monté sur la base (14) pour limiter un mouvement du porteur de stabilisation d'image (10) logeant le barillet de l'objectif dans la direction de l'axe optique.

17. Le module de l'objectif de l'appareil photo selon la revendication 1, lequel comprend en outre :
un module du capteur d'image (194) monté dans une partie inférieure de la base (14),
dans lequel le module du capteur d'image (194) comprend :
un filtre infrarouge (190) disposé au centre d'une ouverture d'une partie inférieure (140) de la base (14) ;
une base du filtre (192) sur laquelle le filtre infrarouge (190) est monté ; et
un substrat (196) sur lequel un capteur d'image disposé en dessous du filtre infrarouge (190) est monté.
